# EUROPEAN PATENT APPLICATION

(11) **EP 3 742 798 A1**
(43) Date of publication of application: **25.11.2020**
(21) Application number: 19382409.1
(22) Date of filing: 21.05.2019
(51) Int. Cl.: H04W 36/00, H04W 88/06

(54) **METHODS AND APPARATUS FOR INDICATING SERVICE AVAILABILITY**

(71) Applicant: Vodafone IP Licensing Limited, Newbury, Berkshire RG14 2FN (GB)
(72) Inventor: Frost, Timothy, London, W2 6BY (GB); Pudney, Christopher, London, W2 6BY (GB)
(74) Representative: Boult Wade Tennant LLP

(57) **Abstract**

Methods and apparatus for providing and establishing an indication of service availability in a mobile telecommunications network including a first base station providing network coverage using a first Radio Access Technology (RAT) and a second base station providing network coverage using a second RAT. The network coverage provided by the second base station at least partially geographically overlaps with the network coverage provided by the first base station. The first base station broadcasts, using the first RAT, system information including frequency information indicative of at least one frequency band used by the second base station in providing network coverage using the second RAT.

## Description

### FIELD OF THE INVENTION

The present disclosure relates to methods and apparatus for use in a mobile telecommunications network. In particular, the present disclosure relates to providing and establishing an indication of service availability in a mobile telecommunications network. The disclosure relates to systems, methods and apparatus for providing and establishing an indication of service availability.

### BACKGROUND

A mobile telecommunications network may employ one or more Radio Access Technologies (RATs) across the network. Well known examples of RATs which may be employed in a mobile telecommunications network include, the Global System for Mobile Communications (GSM), the Universal Mobile Telecommunications System (UMTS), Long-Term Evolution (LTE) and 5G New Radio (NR). Each of these RATs are well-documented and subject to industry standardisation. Typically, each RAT is assigned one or more frequency bands over which radio communications may be transmitted and received using the respective RAT. Generally, different RATs are assigned different frequency bands so as to avoid frequency overlaps between different RATs. Communications using a given RAT therefore generally use one or more frequency bands assigned to the given RAT and utilise communication protocols adhering to the relevant standards for the given RAT.

At least some mobile telecommunications networks may implement a plurality of RATs across the network. For example, a network may include one or more base stations operating using a first RAT and one or more base stations operating using a second RAT. In some implementations, different RATs may be employed in different geographical regions such that network coverage is provided using different RATs in different geographical locations. However, in at least some implementations network coverage provided using different RATs may at least partially geographically overlap. For example, in a given geographical location, network coverage may be available using a plurality of different RATs.

An electronic device such as a User Equipment (UE) may be capable of connecting to a mobile telecommunications network using more than one RAT. For example, a UE may be capable of transmitting and receiving communications over a plurality of frequency bands including at least one frequency band assigned to a first RAT and at least one frequency band assigned to a second RAT. Furthermore, a UE may be capable of utilising communication protocols adhering to the relevant standards for both the first and second RATs. Such a device may be referred to as a multi-RAT capable UE.

As was explained above, in some instances network coverage using different RATs may be provided in different geographical locations. A multi-RAT capable UE may therefore operate using different RATs when located in different geographical locations. For example, a UE may detect that network coverage is provided using a first RAT when located in a first location and may accordingly receive and/or transmit communications using the first RAT when located in the first location. Similarly, when located in a second location, the UE may detect that network coverage is provided using a second RAT and may receive and/or transmit communications using the second RAT.

In at least some locations, network coverage may be provided using a plurality of RATs. In such locations a UE may choose which RAT to use to access a mobile telecommunications network. In some implementations it may be possible for a multi-RAT capable UE to access a mobile telecommunications network using a plurality of RATs, and furthermore may access the plurality of RATs simultaneously. For example, some communications with the network may be conducted using a first RAT and other communications with the network may be conducted using a second RAT.

It at least some implementations it may be desirable to provide an indication to a UE of the network service which is currently available to the UE. For example, it may be desirable to provide an indication of one or more RATs which are available for accessing a mobile telecommunications network. In some examples, it may be desirable to provide such an indication before a UE begins accessing a network using a particular RAT, which may be currently available to the UE.

It is in this context that the subject matter contained in the present application has been devised.

### SUMMARY OF THE INVENTION

According to a first aspect of the present disclosure there is provided a method of providing an indication of service availability in a mobile telecommunications network including a first base station providing network coverage using a first Radio Access Technology (RAT) and a second base station providing network coverage using a second RAT, wherein the network coverage provided by the second base station at least partially geographically overlaps with the network coverage provided by the first base station, the method comprising: broadcasting by the first base station, and using the first RAT, system information including frequency information indicative of at least one frequency band used by the second base station in providing network coverage using the second RAT.

Broadcasting frequency information using the first RAT allows a User Equipment (UE) operating in an idle mode and periodically listening for transmissions made using the first RAT to receive the frequency information, when operating in the idle mode. The UE can therefore receive information related to the frequency bands used in a deployment of the second RAT without listening for or receiving any transmissions made using the second RAT. This advantageously improves an amount of information regarding a second RAT deployment which is available to a UE operating in an idle mode, without significantly increasing power consumption at the UE whilst operating in idle mode.

The frequency information may comprise at least one index value, wherein each of the at least one index value is indicative of at least one frequency band used by the second base station in providing network coverage using the second RAT.

Broadcasting the frequency information in the form of at least one index value, provides an advantageously efficient way in which to broadcast the frequency information, without unduly increasing a signalling overhead. Broadcasting frequency information in the form of one or more index values may advantageously reduce a number of bits of information to be broadcast in the system information. Each of the one or more index values may indicate one or more corresponding frequency bands and/or frequency band combinations which have been assigned to the index value. For example, one or more frequency bands and/or frequency band combinations may be assigned to an index value in a frequency band lookup table. In this way it may be possible to only broadcast one or more index values to indicate the frequency information rather than broadcasting more detailed information related to the frequency bands (or combinations).

The at least one index value may include one or more index values each indicative of a plurality of frequency bands used by the second base station in providing network coverage using the second RAT.

Broadcasting system information including frequency information comprising at least one index value may comprise broadcasting a bitmap including at least one bit (e.g. a single bit) corresponding to each index value. The position of a bit of information in the bitmap may be determined by the index value to which the bit relates.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

The frequency information may be indicative of at least one frequency band on which the second base station supports dual connectivity of a user equipment (UE) to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of a UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT. The at least a first index value may be indicative of a supported frequency band combination.

The at least a first index value may include one or more index values each being indicative of a plurality of supported frequency band combinations.

The frequency information may be indicative of at least one frequency band over which a UE may connect to the second base station using a single RAT configuration.

Broadcasting the system information may comprise broadcasting a System Information Block, SIB, including the frequency information.

The method may further comprise sending by the first base station to a core network of the mobile telecommunications network, an indication of one or more frequency bands used by the first base station in providing network coverage using the first RAT.

The method may further comprise receiving at the first base station the frequency information from a core network of the mobile telecommunications network and including the received frequency information in the broadcast system information.

The frequency information may comprise at least one index value, wherein each of the at least one index value is indicative of at least one frequency band used by the second base station in providing network coverage using the second RAT. The method may further comprise: receiving at the first base station a frequency band lookup table comprising a plurality of frequency bands and corresponding index values.

The method may further comprise determining, in dependence on the received frequency band lookup table, one or more index values to include in the broadcast frequency information.

The frequency information may be for passing to higher protocol layers in a UE receiving the frequency information. The frequency information may be for determining by a UE, whether the UE is capable of connecting to the second base station using the second RAT.

According to a second aspect of the present disclosure there is provided a method of establishing service availability in a mobile telecommunications network supporting a plurality of Radio Access Technologies (RATs), the method comprising: operating a User Equipment (UE) in an idle mode in which the UE periodically listens for transmissions made using a first RAT; and receiving at the UE, whilst operating in the idle mode, a system information broadcast from a first base station providing network coverage using the first RAT, wherein the system information broadcast includes frequency information indicative of at least one frequency band used by a second base station in providing network coverage using a second RAT, wherein the network coverage provided by the second base station at least partially geographically overlaps with the network coverage provided by the first base station, and wherein the frequency information is for establishing whether the UE is capable of receiving network coverage from the second base station using the second RAT.

The frequency information may further comprise at least one index value, wherein each of the at least one index value is indicative of at least one frequency band used by the second base station in providing network coverage using the second RAT.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

Broadcasting system information including frequency information comprising at least one index value may comprise broadcasting a bitmap including at least one bit (e.g. a single bit) corresponding to each index value. The position of a bit of information in the bitmap may be determined by the index value to which the bit relates.

The method may further comprise: determining from the at least one index value, one or more frequency bands used by the second base station in providing network coverage using the second RAT.

Determining the one or more frequency bands may comprise looking up the at least one index value in a lookup table comprising a plurality of frequency bands and corresponding index values.

The method may further comprise receiving at the UE the frequency band lookup table comprising a plurality of frequency bands and corresponding index values.

The lookup table may be received from a core network of the mobile telecommunications network

The at least one index value may include one or more index values each indicative of a plurality of frequency bands used by the second base station in providing network coverage using the second RAT.

The frequency information may be indicative of at least one frequency band on which the second base station supports dual connectivity of the UE to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of the UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT and wherein the at least one index value includes at least a first index value indicative of at least one supported frequency band combination.

The at least a first index value may include one or more index values each being indicative of a plurality of supported frequency band combinations.

The frequency information may be indicative of at least one frequency band over which the UE may connect to the second base station using a single RAT configuration.

Receiving the broadcast system information may comprise receiving a System Information Block, SIB, including the frequency information.

The frequency information may be passed to higher protocol layers in the UE. The frequency information may be used to determine by the UE, whether the UE is capable of connecting to the second base station using the second RAT.

The method may further comprise determining, by the UE, and in dependence on the received frequency information, whether the UE is capable of connecting to the telecommunications network through the second base station and using the second RAT.

The method may further comprise: if it is determined that the UE is capable of connecting to the telecommunications network through the second base station and using the second RAT, displaying on a display of the UE an indication that the UE is capable of connecting to the telecommunications network using the second RAT.

Operating the UE in the idle mode may comprise receiving transmissions from the telecommunications network exclusively using the first RAT.

The method may further comprise receiving at the first base station the frequency information from a core network of the mobile telecommunications network and including the received frequency information in the broadcast system information.

According to a third aspect of the present disclosure there is provided a method of establishing service availability in a mobile telecommunications network including a first base station providing network coverage using a first Radio Access Technology (RAT) and a second base station providing network coverage using a second RAT, wherein the network coverage provided by the second base station at least partially geographically overlaps with the network coverage provided by the first base station, the method comprising: operating a User Equipment (UE) in an idle mode in which the UE periodically listens for transmissions made using the first RAT; broadcasting by the first base station, and using the first RAT, system information including frequency information indicative of at least one frequency band used by the second base station in providing network coverage using the second RAT; receiving at the UE, whilst operating in the idle mode, the system information broadcast from the first base station, wherein the frequency information is for establishing whether the UE is capable of receiving network coverage from the second base station using the second RAT.

The method may further comprise: sending by the first base station to a core network of the mobile telecommunications network, an indication of one or more frequency bands used by the first base station in providing network coverage using the first RAT.

The method may further comprise: sending by the second base station to a core network of the mobile telecommunications network, an indication of one or more frequency bands used by the second base station in providing network coverage using the second RAT.

Sending the indication of the one or more frequency bands to the core network may comprise sending the indication of the one or more frequency bands to the core network using the first base station.

The frequency information may comprise at least one index value, wherein each of the at least one index value is indicative of at least one frequency band used by the second base station in providing network coverage using the second RAT. The method may further comprise: receiving at the first base station a frequency band lookup table comprising a plurality of frequency bands and corresponding index values.

The method may further comprise determining by the first base station and in dependence on the received frequency band lookup table, one or more index values to include in the broadcast frequency information.

The frequency information may further comprise at least one index value, wherein each of the at least one index value is indicative of at least one frequency band used by the second base station in providing network coverage using the second RAT.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

The method may further comprise: determining by the UE and from the at least one index value, one or more frequency bands used by the second base station in providing network coverage using the second RAT.

Determining the one or more frequency bands may comprise looking up the at least one index value in a lookup table comprising a plurality of frequency bands and corresponding index values.

The method may further comprise receiving at the UE the frequency band lookup table comprising a plurality of frequency bands and corresponding index values.

The lookup table may be received from a core network of the mobile telecommunications network

The at least one index value may include one or more index values each indicative of a plurality of frequency bands used by the second base station in providing network coverage using the second RAT.

The frequency information may be indicative of at least one frequency band on which the second base station supports dual connectivity of the UE to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of the UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT and wherein the at least one index value includes at least a first index value indicative of at least one supported frequency band combination.

The at least a first index value may include one or more index values each being indicative of a plurality of supported frequency band combinations.

The frequency information may be indicative of at least one frequency band over which the UE may connect to the second base station using a single RAT configuration.

Receiving the broadcast system information may comprise receiving a System Information Block, SIB, including the frequency information.

The frequency information may be passed to higher protocol layers in the UE. The frequency information may be used to determine by the UE, whether the UE is capable of connecting to the second base station using the second RAT.

The method may further comprise determining, by the UE, and in dependence on the received frequency information, whether the UE is capable of connecting to the telecommunications network through the second base station and using the second RAT.

The method may further comprise: if it is determined that the UE is capable of connecting to the telecommunications network through the second base station and using the second RAT, displaying on a display of the UE an indication that the UE is capable of connecting to the telecommunications network using the second RAT.

Operating the UE in the idle mode may comprise receiving transmissions from the telecommunications network exclusively using the first RAT.

According to a fourth aspect of the present disclosure there is provided a computer program comprising instructions which, when carried out, cause a method according to any of the first, second or third aspects.

According to a fifth aspect of the present disclosure there is provided a first base station for use in a telecommunications network supporting a plurality of Radio Access Technologies (RATs) wherein the first base station is configured to: provide network coverage using a first RAT; broadcast, using the first RAT, system information including frequency information indicative of at least one frequency band used by a second base station, wherein the second base station provides network coverage over the at least one frequency band and using a second RAT, and wherein the network coverage provided by the second base station at least partially geographically overlaps with the network coverage provided by the first base station.

The frequency information may comprise at least one index value, wherein each of the at least one index value is indicative of at least one frequency band used by the second base station in providing network coverage using the second RAT.

The at least one index value may include one or more index values each indicative of a plurality of frequency bands used by the second base station in providing network coverage using the second RAT.

Broadcasting system information including frequency information comprising at least one index value may comprise broadcasting a bitmap including at least one bit (e.g. a single bit) corresponding to each index value. The position of a bit of information in the bitmap may be determined by the index value to which the bit relates.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

The frequency information may be indicative of at least one frequency band on which the second base station supports dual connectivity of a user equipment (UE) to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of a UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT. The at least a first index value may be indicative of a supported frequency band combination.

The at least a first index value may include one or more index values each being indicative of a plurality of supported frequency band combinations.

The frequency information may be indicative of at least one frequency band over which a UE may connect to the second base station using a single RAT configuration.

Broadcasting the system information may comprise broadcasting a System Information Block, SIB, including the frequency information.

The first base station may be further configure to send to a core network of the mobile telecommunications network, an indication of one or more frequency bands used by the first base station in providing network coverage using the first RAT.

The first base station may be further configured to receive the frequency information from a core network of the mobile telecommunications network and include the received frequency information in the broadcast system information.

The frequency information may comprise at least one index value, wherein each of the at least one index value is indicative of at least one frequency band used by the second base station in providing network coverage using the second RAT. The first base station may be further configured to receive a frequency band lookup table comprising a plurality of frequency bands and corresponding index values.

The base station may be further configured to determine, in dependence on the received frequency band lookup table, one or more index values to include in the broadcast frequency information.

The frequency information may be for passing to higher protocol layers in a UE receiving the frequency information. The frequency information may be for determining by a UE, whether the UE is capable of connecting to the second base station using the second RAT.

According to a sixth aspect of the present disclosure there is provided a first base station for use in a telecommunications network supporting a plurality of Radio Access Technologies, (RATs) wherein the first base station comprises: a processor; a memory; and a transceiver wherein the memory stores instructions for execution by the processor and wherein the processor is configured to execute the instructions to cause the transceiver to: provide network coverage using a first Radio Access Technology, RAT; and broadcast, using the first RAT, system information including frequency information indicative of at least one frequency band used by a second base station, wherein the second base station provides network coverage over the at least one frequency band and using a second RAT, and wherein the network coverage provided by the second base station at least partially geographically overlaps with the network coverage provided by the first base station.

According to a seventh aspect of the present disclosure there is provide a User Equipment (UE) for use in a mobile telecommunications network supporting a plurality of Radio Access Technologies (RATs) the UE being configured to: operate in an idle mode in which the UE periodically listens for transmissions made using a first RAT; and receive whilst operating in the idle mode, a system information broadcast from a first base station providing network coverage using a first RAT, wherein the system information broadcast includes frequency information indicative of at least one frequency band used by a second base station providing network coverage using a second RAT, wherein the network coverage provided by the second base station at least partially geographically overlaps with the network coverage provided by the first base station, and wherein the frequency information is for establishing whether the UE is capable of receiving network coverage from the second base station using the second RAT.

The frequency information may further comprise at least one index value, wherein each of the at least one index value is indicative of at least one frequency band used by the second base station in providing network coverage using the second RAT.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

Broadcasting system information including frequency information comprising at least one index value may comprise broadcasting a bitmap including at least one bit (e.g. a single bit) corresponding to each index value. The position of a bit of information in the bitmap may be determined by the index value to which the bit relates.

The UE may be further configured to determine from the at least one index value, one or more frequency bands used by the second base station in providing network coverage using the second RAT.

Determining the one or more frequency bands may comprise looking up the at least one index value in a lookup table comprising a plurality of frequency bands and corresponding index values.

The UE may further configured to receive at the UE the frequency band lookup table comprising a plurality of frequency bands and corresponding index values.

The UE may be configured to receive the lookup table from a core network of the mobile telecommunications network

The at least one index value may include one or more index values each indicative of a plurality of frequency bands used by the second base station in providing network coverage using the second RAT.

The frequency information may be indicative of at least one frequency band on which the second base station supports dual connectivity of the UE to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of the UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT and wherein the at least one index value includes at least a first index value indicative of at least one supported frequency band combination.

The at least a first index value may include one or more index values each being indicative of a plurality of supported frequency band combinations.

The frequency information may be indicative of at least one frequency band over which the UE may connect to the second base station using a single RAT configuration.

Receiving the broadcast system information may comprise receiving a System Information Block, SIB, including the frequency information.

The UE may be configured to pass the frequency information to higher protocol layers in the UE. The frequency information may be used to determine whether the UE is capable of connecting to the second base station using the second RAT.

The UE may be further configured to determine, in dependence on the received frequency information, whether the UE is capable of connecting to the telecommunications network through the second base station and using the second RAT.

The UE may be further configured to: if it is determined that the UE is capable of connecting to the telecommunications network through the second base station and using the second RAT, display on a display of the UE an indication that the UE is capable of connecting to the telecommunications network using the second RAT.

Operating the UE in the idle mode may comprise receiving transmissions from the telecommunications network exclusively using the first RAT.

According to an eight aspect of the present disclosure there is provided a User Equipment (UE) for use in a mobile telecommunications network supporting a plurality of Radio Access Technologies (RATs) the UE comprising: a processor; a memory; and a transceiver, wherein the memory stores instructions for execution by the processor and wherein the processor is configured to execute the instructions to cause the UE to: operate in an idle mode in which the UE periodically listens, using the transceiver, for transmissions made using a first RAT; and receiving, by the transceiver, whilst operating in the idle mode, a system information broadcast from a first base station providing network coverage using a first RAT, wherein the system information broadcast includes frequency information indicative of at least one frequency band used by a second base station providing network coverage using a second RAT, wherein the network coverage provided by the second base station at least partially geographically overlaps with the network coverage provided by the first base station, and wherein the frequency information is for establishing whether the UE is capable of receiving network coverage from the second base station using the second RAT.

According to a ninth aspect of the present disclosure there is provided a system for establishing service availability in a mobile telecommunications network supporting a plurality of Radio Access Technologies (RATs) the system comprising: a first base station configured to provide network coverage using a first RAT and to broadcast, using the first RAT, system information including frequency indicative of at least one frequency band used by a second base station in providing network coverage over the at least one frequency band and using a second RAT, wherein the network coverage provided by the second base station at least partially geographically overlaps with the network coverage provided by the second base station; and a User Equipment (UE) configured to operate in an idle mode in which the UE periodically listens for transmissions made using the first RAT and to receive at the UE, whilst operating in the idle mode, the system information broadcast from the first base station, wherein the frequency information is for establishing whether the UE is capable of receiving network coverage from the second base station using the second RAT.

The first base station may be further configured to send to a core network of the mobile telecommunications network, an indication of one or more frequency bands used by the first base station in providing network coverage using the first RAT.

The system may further comprise the second base station, wherein the second base station is configured to send to a core network of the mobile telecommunications network, an indication of one or more frequency bands used by the second base station in providing network coverage using the second RAT.

Sending the indication of the one or more frequency bands to the core network may comprise sending the indication of the one or more frequency bands to the core network using the first base station.

The frequency information may comprise at least one index value, wherein each of the at least one index value is indicative of at least one frequency band used by the second base station in providing network coverage using the second RAT. The method may further comprise: receiving at the first base station a frequency band lookup table comprising a plurality of frequency bands and corresponding index values.

The first base station may be further configured to determine, in dependence on the received frequency band lookup table, one or more index values to include in the broadcast frequency information.

The frequency information may further comprise at least one index value, wherein each of the at least one index value is indicative of at least one frequency band used by the second base station in providing network coverage using the second RAT.

The frequency information may comprise one or more index values, wherein each index value is indicative of one or more of: at least one frequency band used by the second base station in providing network coverage using the second RAT; and at least one combination of a first frequency band used by the first base station in providing network coverage using the first RAT and a second frequency band used by the second base station in providing network coverage using the second RAT.

The UE may be further configured to determine from the at least one index value, one or more frequency bands used by the second base station in providing network coverage using the second RAT.

Determining the one or more frequency bands may comprise looking up the at least one index value in a lookup table comprising a plurality of frequency bands and corresponding index values.

The UE may be further configured to receive the frequency band lookup table comprising a plurality of frequency bands and corresponding index values.

The lookup table may be received from a core network of the mobile telecommunications network

The at least one index value may include one or more index values each indicative of a plurality of frequency bands used by the second base station in providing network coverage using the second RAT.

The frequency information may be indicative of at least one frequency band on which the second base station supports dual connectivity of the UE to the mobile telecommunications network through the second base station using the second RAT and the first base station using the first RAT.

The frequency information may be indicative of at least one supported frequency band combination comprising: at least a first frequency band used by the first base station in providing network coverage using the first RAT; and at least a second frequency band used by the second base station in providing network coverage using the second RAT, wherein the mobile telecommunications network supports dual connectivity of the UE to the mobile telecommunications network through the first base station using the first RAT and the at least one first frequency band and through the second base station using the second RAT and the at least one second frequency band.

The frequency information may comprise at least one index value, wherein each of the at least one index value is indicative of at least one frequency band used by the second base station in providing network coverage using the second RAT and wherein the at least one index value includes at least a first index value indicative of at least one supported frequency band combination.

The at least a first index value may include one or more index values each being indicative of a plurality of supported frequency band combinations.

The frequency information may be indicative of at least one frequency band over which the UE may connect to the second base station using a single RAT configuration.

Receiving the broadcast system information may comprise receiving a System Information Block, SIB, including the frequency information.

The UE may be configured to pass the frequency information to higher protocol layers in the UE. The UE may be configured to determine, from the frequency information, whether the UE is capable of connecting to the second base station using the second RAT.

The UE may be further configured to determine in dependence on the received frequency information, whether the UE is capable of connecting to the telecommunications network through the second base station and using the second RAT.

The UE may be configured to: if it is determined that the UE is capable of connecting to the telecommunications network through the second base station and using the second RAT, display on a display of the UE an indication that the UE is capable of connecting to the telecommunications network using the second RAT.

Operating the UE in the idle mode may comprise receiving transmissions from the telecommunications network exclusively using the first RAT.

The first RAT as specified in any of the preceding aspects may comprise one of Fourth Generation, 4G, Long Term Evolution, LTE, LTE Advanced, Fifth Generation, 5G, and New Radio, NR.

The second RAT as specified in any of the preceding aspect may comprise another of Fourth Generation, 4G, Long Term Evolution, LTE, LTE Advanced, Fifth Generation, 5G, and New Radio, NR.

In at least some examples, the first RAT may comprise LTE and the second RAT may comprise NR.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all examples and/or features of any example can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF FIGURES

One or more embodiments of the invention are shown schematically, by way of example only, in the accompanying drawings, in which:
- Figure 1 is a schematic illustration of a telecommunications network;
- Figure 2 is a schematic illustration of a telecommunications network according to examples of the present disclosure;
- Figure 3 is a schematic illustration of a User Equipment according to examples of the present disclosure;
- Figure 4 is a schematic illustration of signalling between a core network, a plurality of base stations and a User Equipment according to examples of the present disclosure;
- Figure 5 is a flow chart illustrating a method of establishing service availability in a mobile telecommunications network according to examples of the present disclosure; and
- Figure 6 is a schematic illustration of an example of an electronic device which may be used to implement examples of the present disclosure.

### DETAILED DESCRIPTION

Before particular examples of the present disclosure are described, it is to be understood that the present disclosure is not limited to the particular network systems, modules and devices or methods described herein. It is also to be understood that the terminology used herein is used for describing particular examples only and is not intended to limit the scope of the claims.

Whilst the present disclosure is generally presented in the context of dual connectivity using Long Term Evolution (LTE) and 5G New Radio (NR) Radio Access Technologies (RATs), it will be understood that the teachings of the present disclosure may apply equally to other examples of Radio Access Technologies (RATs). For example, the teachings presented herein may apply to any situation where a User Equipment (UE) may connect to a telecommunications network using two or more RATs. The UE may connect to the telecommunications network using two or more RATs simultaneously. Additionally or alternatively, the UE may connect to the telecommunications network (or otherwise transmit and/or receive communications) using different RATs at different times. Suitable examples of RATs may include (but are not limited to) any 3GPP standardised RAT including Fourth Generation (4G), LTE, LTE-Advanced, Fifth Generation (5G) and/or NR

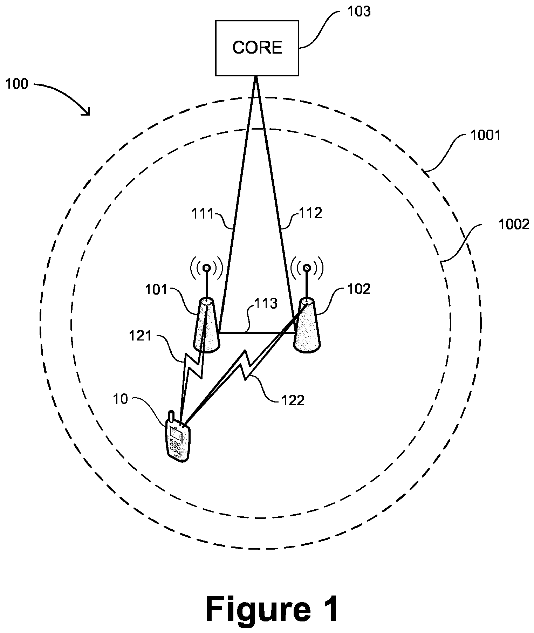

Figure 1 is a schematic illustration of an example of a mobile telecommunications network 100. The telecommunications network 100 includes a first base station 101, a second base station 102 and a core network 103.

The first base station 101 provides network coverage using a first RAT. For example, the first base station 101 may exchange communications (e.g. radio frequency signals) with a UE 10 situated within a geographical coverage area 1001 (e.g. a cell) over an air interface 121. The first base station 101 may exchange communications by transmitting and/or receiving communications in one or more frequency bands assigned to the first RAT and utilising communication protocols specified for the first RAT (e.g. standardised communication protocols for the first RAT).

The second base station 102 provides network coverage using a second RAT. For example, the second base station 102 may exchange communications (e.g. radio frequency signals) with a UE 10 situated within a geographical coverage area 1002 (e.g. a cell) over an air interface 122. The second base station 102 may exchange communications by transmitting and/or receiving communications in one more frequency bands assigned to the second RAT and utilising communication protocols specified for the second RAT (e.g. standardised communication protocols for the second RAT).

In at least some of the examples contemplated herein, the first RAT may comprise LTE and the second RAT may comprise NR. In such examples, the first base station 101 may comprise an Evolved Node B (eNB) and the second base station 102 may comprise a Next Generation Node B (gNB). The first base station 101 in the form of an eNB may transmit and receive communications over an air interface 121 using one or more frequency bands assigned to LTE, such as one or more of the frequency bands listed in [1]. The second base station 102 in the form of a gNB may transmit and receive communications over an air interface 122 using one or more frequency bands assigned to NR, such as one or more of the frequency bands listed in [2].

The first base station 101 and/or the second base station 102 provide access to the core network 103 to compatible devices (e.g. UE 10) situated within the first 1001 and/or second 1002 coverage areas. The core network 103 may comprise any suitable network infrastructure for providing access to one or more network services, as is commonly known in the art. For example, the core network 103 may comprise an Evolved Packet Core (EPC). Additionally or alternatively, the core network 103 may comprise a Next Generation Core (NextGen Core).

In the example depicted in Figure 1, the first base station 101 and the second base station 102 are connected to a common core network 103. That is, the first base station 101 and the second base station 102 may provide connectivity to the same core network 103. In the example shown in Figure 1, a direct interface 111 (e.g. an S1 interface) is provided between the first base station 101 and the core network 103. Furthermore, a direct interface 112 (e.g. an S1 interface) is provided between the second base station 102 and the core network 103. Such an architecture may be referred to as a Non-Standalone Architecture (NSA) in which a base station using a second RAT is connected to a core network associated with a first RAT. For example, the first base station 101 may comprise an LTE eNB and the second base station 102 may comprise a NR gNB both of which may be directly connected to a common core network 103 which may, for example, comprise an LTE core network 103 in the form of an EPC.

As is shown in Figure 1, a direct interface 113 (e.g. a X2 interface) may also be provided between the first base station 101 and the second base station 102. Whilst, the example shown in Figure 1 includes both a direct interface 112 between the second base station 102 and the core network 103 and a direct interface 113 between the first base station 101 and the second base station 102, in some examples one of these interfaces 112, 113 may be omitted. For example, the direct interface 112 between the second base station 102 and the core network 103 may be omitted. In such an example, data may be exchanged between the core network 103 and the second base station 102 via the first base station 101 (e.g. utilising the interface 113 between the first 101 and second 102 base stations and the interface 111 between the first base station 101 and the core network 103).

As is shown in Figure 1, the geographical coverage area 1001 over which the first base station 101 provides network coverage and the geographical coverage area 1002 over which the second base station 102 provides network coverage may at least partially overlap. In some examples, the first 101 and second 102 base stations may be substantially co-located. For example, the first 101 and second 102 base stations may share an antenna tower. Furthermore, in some examples, the first 101 and second 102 base stations may share one or more pieces of hardware. For example, one or more functions of the first 101 and second 102 base stations may be implemented on the same piece of hardware. However, in such cases, the first and second base stations 101, 102 are still considered to comprise separate network nodes. In other examples, the first 101 and second base stations 102 may be implemented on independent hardware.

Whilst in some examples, the first 101 and second 102 base stations may be substantially collocated, in other examples, the first 101 and second 102 base stations may be separated from each other. For examples, the first 101 and second 102 base stations may be located at separate sites. However, the physical separation between the first 101 and second 102 base stations may be sufficiently small such that the areas 1001, 1002 of network coverage provided by the first 101 and second 102 base stations at least partially overlap with one another.

At least partial overlap between the coverage areas 1001, 1002 provided by the first 101 and second 102 base stations may enable a UE 10 situated in a region of coverage overlap to connect to the core network 103 through the first 101 and second 102 base stations simultaneously. For example, as is shown in Figure 1, a UE 10 may be situated in a location inside the coverage are 1001 provided by the first base station 101 and inside the coverage area 1002 provided by the second base station 102. The UE 10 may be multi-RAT capable such that it is capable of exchanging communications with both the first base station using the first RAT and the second base station 102 using the second RAT. This may enable the UE to connect with the core network 103 through the first 101 and second 102 base stations using the first and second RATs simultaneously. Such an implementation may be referred to as dual-connectivity in which a UE connects to a plurality of base stations 101, 102 using a plurality of RATs simultaneously.

Example implementations of dual-connectivity architectures and implementations are described in [3] and referred to as Multi-Radio Dual Connectivity (MR-DC). As described in [3], in an MR-DC architecture, one of the base stations 101, 102 may be configured as a Master base station (or node) and another of the base stations 101, 102 may be configured as a Secondary base station (or node). A multi-RAT capable UE 10 may first establish a connection with the Master base station (e.g. the first base station 101), which then controls the establishment of a secondary connection between the UE and the Secondary base station (e.g. the second base station 102). Once connections with both the Master 101 and Secondary 102 base stations are established, data (e.g. user plane data) may be sent between the UE and the core network 103 through the Master base station 101 and/or the Secondary base station 102. For example, a split bearer may be established with the core network 103 which allows data packets to be exchanged between the core network 103 and the UE 10 through both the Master base station 101 and the Secondary base station 102. For example, some data packets may be exchanged through the Master base station 101 and some data packets may be exchanged through the Secondary base station 102.

A particular example of an MR-DC architecture which has been proposed is an E-UTRAN New Radio-Dual Connectivity (EN-DC) architecture. In a EN-DC architecture, the Master base station 101 comprises an LTE eNB and the Secondary base station 102 comprises a NR gNB. The core network 103 to which both the Master 101 and Secondary base 102 stations are connected may comprise an LTE core network 103 e.g. an EPC 103.

In a EN-DC architecture, a multi-RAT capable UE 10 first establishes a connection with the eNB 101 using LTE protocols and frequency bands. The UE 10 may indicate to the eNB 101 that communication using NR is supported by the UE 10. If a gNB 102 with overlapping coverage area 1002 is available, the eNB 101 may instruct the UE 10 to make measurements on one or more NR frequency bands. If the UE 10 successfully measures a signal transmitted by the gNB 102 in a NR frequency band then this may be communicated with the eNB 101, which may in turn pass any necessary parameters to the gNB 102 in order to enable a connection to be established between the UE and the gNB 102. The UE 10 may then be simultaneously connected to both the eNB 101 and the gNB 102.

Whilst a EN-DC architecture has been briefly described as a specific example of a dual-connectivity architecture, it will be understood that other forms of dual-connectivity architectures may be utilised. Any teachings presented herein with reference to a specific dual-connectivity architecture, such as an EN-DC architecture, may equally apply to other forms of dual-connectivity architecture, whether contemplated herein or otherwise.

As was explained above, in a dual-connectivity architecture a UE 10 may establish simultaneous connections with a plurality of base stations 101, 102 providing coverage using different RATs. For example, simultaneous connections with a plurality of base stations 101, 102 may be used to exchange data streams (e.g. user data) between the UE 10 and a common core network 103. Whilst simultaneous connections with a plurality of base stations 101, 102 may be established during time periods when data is exchanged between a UE 10 and the core network 103, at other times it may be advantageous to operate a UE 10 in an idle mode. For example, after a time period of inactivity in which little or no user data is exchanged between the core network 103 and a UE 10, the UE 10 may enter an idle mode (e.g. under instruction from a node of the core network 103, such as a Mobility Management Entity (MME)).

When operating in an idle mode, a UE 10 may turn off a transceiver included in the UE 10 for at least a portion of the time in order to reduce power consumption at the UE 10. For example, the UE 10 may power down a transceiver and stop listening for signals transmitted by a base station and stop transmitting any signals to a base station so as to reduce power consumption. When operating in an idle mode, a UE 10 generally periodically listens for communications from a base station. For example, the UE 10 may periodically turn on a transceiver and receive communications from a base station, which may be referred to as a discontinuous reception (DRX) cycle. The UE 10 may synchronise its DRX cycle with a base station such that the base station can contact the UE 10 by transmitting a message, e.g. a paging message, during a portion of the DRX cycle during which the UE 10 is listening for incoming communications (e.g. when a transceiver of the UE 10 is switched on). For example, in the event that a base station receives an incoming communication for a UE 10, the base station may transmit a paging message addressed to the UE 10 in order to contact the UE 10. On receipt of the paging message, the UE 10 may establish an active connection with the base station in order to receive the incoming communication over the active connection.

Operation of a UE 10 in an idle mode will be well understood by a skilled person and will not be described in any more detail herein. For example, operation of a UE 10 in a Radio Resource Control (RRC) Idle mode is well-known and documented in the art and represents an example of an idle mode as contemplated herein. In general, references herein to a UE 10 operating in an idle mode are intended to refer to any mode in which a UE 10 listens for communications on a periodic and discontinuous basis.

A UE 10 operating in an idle mode may listen for and receive broadcasts from a base station. The term "broadcast" is used herein to refer to communications which are transmitted without being addressed to a specific device. For example, a base station may broadcast one or more signals in order to enable a UE 10 within coverage range of the base station to detect the presence of the base station. Broadcasts from a base station may additionally or alternatively be used to communicate configuration parameters of the base station in order to enable a UE 10 to synchronise with and connect to the base station.

A UE 10 operating in an idle mode and situated within a coverage area 1001, 1002 of a base station may be referred to as being camped on a cell of the base station. For example, a UE 10 may periodically listen for communications (which may include broadcasts) transmitted from a base station and may synchronise its DRX cycle with the base station in order to be able to receive any paging messages directed to the UE.

As will be further understood by a skilled person, a UE 10 may move between cells when operating in an idle mode. For example, a UE 10 situated within a coverage area of a first base station using a first RAT may camp on a cell deployed by the first base station while operating in an idle mode using the first RAT. If the UE 10 moves and becomes situated within a coverage area of another base station also providing coverage using the first RAT, then the UE 10 may detect the presence of the other base station and may transition to camp on the other base station. In this scenario, the UE 10 may continue operating in an idle mode whilst transitioning between cells, particularly where the cells are deployed using the same RAT.

As was explained above, operating a UE in an idle mode may allow a reduction in power consumption at the UE since a transceiver of the UE 10 may be periodically powered down. This may be particularly advantageous in examples in which the UE 10 is battery powered and thus subject to limited power resources. In a dual-connectivity architecture, it may be desirable for a UE 10 to only communicate with one base station when operating in an idle mode rather than communicating with a plurality of base stations as is possible when active connections are established with the base stations (i.e. when the UE 10 is not operating in an idle mode). For example, a multi-RAT capable UE 10 may only listen for communications transmitted using one RAT when operating in an idle mode. In particular, the UE may only listen to communications over one or more frequency bands assigned to a single RAT when operating in an idle mode. Listening for and receiving communications transmitted over a plurality of RATs will generally lead to greater power consumption, when compared to listening for and receiving communications transmitted over one RAT. A multi-RAT capable UE 10 may therefore reduce power consumption when operating in an idle mode by only listening for communications transmitted using one RAT.

In a MR-DC architecture of the type described above, a multi-RAT capable UE 10 may listen for and receive communications from the Master base station 101 (made using a first RAT) when operating in an idle mode. That is, a UE 10 may be considered to be camped on a Master cell provided by the Master base station 101. The UE 10 may not listen for or receive communications transmitted by the Secondary base station 102 (made using a second RAT) when operating in an idle mode.

In the example of an EN-DC architecture, a multi-RAT capable UE 10 may listen for and receive communications from an eNB 101 (acting as a Master base station) when operating in an idle mode. That is, a UE 10 may be considered to be camped on an LTE cell provided by the eNB 101. The UE may not listen for or receive communications transmitted by a gNB 102 (acting as a Secondary base station) when operating in an idle mode.

In a situation in which a UE 10 operates in an idle mode and exclusively listens for and receives communications using a first RAT, the UE 10 is not directly aware of the availability of any other RATs. For example, since the UE 10 does not listen for or receive communications transmitted using a second RAT, the UE 10 may not be aware of the availability or otherwise of network coverage using a second RAT.

In some scenarios it may be desirable for a UE 10 operating in an idle mode to establish the availability or otherwise of a network service. For example, it may be desirable to establish the availability of a deployment of a RAT. As was explained above, a UE 10 may camp on a cell operated by a first base station 101 using a first RAT whilst the UE 10 operates in an idle mode. In such a situation it may be desirable to establish whether network coverage is available using a second RAT, different to the first RAT, whilst the UE 10 remains in idle mode. For example, in a EN-DC architecture, it may be desirable for a UE 10 camped on an LTE cell provided by an eNB 101 to establish whether network coverage is also available using a gNB 102 deploying NR.

Establishing, the availability of a deployment of a second RAT (such as NR) may allow a UE 10 to display an indication of the availability of the second RAT whilst operating in an idle mode and being camped on a cell deployed using a first RAT (such as LTE). Such a displayed indication may allow a user of the UE 10 to establish a type of network connection or service which is currently available. For example, in a case in which a UE 10 is camped on an LTE cell, if a deployment of NR is available (e.g. the UE is situated in a coverage area of a gNB), then it may be desirable to display an indication to a user of the UE 10 that a NR deployment is available. The user may then understand a level of network service which is currently available and may choose to use their UE 10 according. For example, if a user is informed that a NR network deployment is available then they may understand that generally faster connection speeds are available than if no NR network deployment is available (when compared to, for example, a deployment of LTE).

As was explained above, a UE 10 operating in an idle mode and periodically listening for and receiving communications transmitted using a first RAT may not be aware of the availability or otherwise of a deployment of a second RAT. In order to overcome this problem, one approach which has been suggested [4], [5], [6], [7], [8], [9], [10] is to provide an indication of the availability or otherwise of a second RAT using the first RAT. In particular, it has been proposed that an indicator be provided as part of an LTE system information broadcast provided by an eNB to indicate the availability of a collocated deployment of NR. It has been proposed that the indicator is provided as a binary piece of information simply to indicate whether a co-located gNB is deployed providing NR coverage.

A UE 10 operating in an idle mode and camped on a cell provided by the eNB may listen for and receive a system information broadcast transmitted by the eNB. If the indicator provided as part of the system information broadcast is set to true then the UE 10 may establish that a NR deployment is available. If the indicator is set to false, then the UE 10 may establish that no NR deployment is available. This information may be passed to higher protocol layers in the UE 10, which may enable the UE 10 to display an indication of the availability of a particular RAT. For example, if the indicator is set to true, the UE 10 may display an indicator reading "5G" to indicate the availability of a NR deployment.

Whilst the above described proposal is capable of providing an indication of the availability of a NR deployment, there may be several scenarios in which the indicator broadcast by an eNB does not match the availability of a NR deployment to a given UE 10.

As was explained above, a given RAT may be deployed using one or more of a plurality of frequency bands assigned to the given RAT. For example, a first plurality of frequency bands have been assigned to LTE communications and a second plurality of frequency band have been assigned to NR communications. However, a deployment of a RAT at a base station may utilise only a subset of the frequency bands assigned to a RAT. For example, an eNB typically only utilises a subset of all of the LTE frequency bands and a gNB typically only utilises a subset of all of the NR frequency bands.

A given multi-RAT capable UE 10 may be capable of transmitting and receiving communication signals over a subset of the frequency bands which have been assigned to a given RAT. For example, a UE 10 which is capable of connecting to a network using both LTE and NR may only be capable of transmitting and receiving signals over a subset of all of the frequency bands assigned to NR. Consequently, a multi-RAT capable UE 10, which is operating in an idle mode and camped on an LTE cell, may receive an indicator (as part of an LTE system information broadcast) that a collocated NR deployment is available. However, whilst the UE 10 may be capable of connecting over some NR frequency bands, the UE 10 may not be capable of using one or more of the NR frequency bands used for the currently available NR deployment. Consequently, an indication of network service availability may be displayed to a user of the UE 10 which does not match the current availability of network services to the UE 10.

For instance, in an illustrative example and with reference to Figure 1, a mobile telecommunications network may include an eNB 101 providing network coverage over a first coverage area 1001 using LTE and a gNB 102 providing network coverage over a second coverage area 1002 using NR. The gNB 102 may, for example, provide a NR deployment using a 1800 MHz (n3) frequency band. The first coverage area 1001 and the second coverage area 1002 at least partially overlap and dual connectivity may be provided using both LTE and NR. The eNB 101 may therefore broadcast system information including an indicator set to true to indicate the presence of a collocated NR deployment.

A multi-RAT capable UE 10 may camp on the LTE cell provided by the eNB 101. The UE may be capable of connecting to a network using NR and may in particular support transmission and reception of communications over a 3500 MHz (n78) frequency band assigned to NR. However, the UE 10 may not support transmission and reception of communications over the 1800 MHz (n3) frequency band used by the collocated NR deployment.

The UE 10 camped on the LTE cell provided by the eNB 101 and operating in an idle mode, may receive a system information broadcast transmitted by the eNB 101 including the indicator set to true to indicate the presence of a collocated NR deployment. The UE 10 may therefore establish that a NR deployment is available and may pass this information to higher protocol layers of the UE 10 to enable the UE 10 to display an indication of the availability of a NR deployment. A user of the UE 10 may view the indication of NR availability and may therefore expect the availability of NR connectivity. However, once the UE 10 establishes an active connection to the network (e.g. through the eNB) it will be established that the capabilities of the UE 10 are not compatible with the current NR deployment and it will not be possible to establish dual-connectivity to the network through the gNB. The user will therefore only experience LTE connectivity having expected to be able to achieve a NR connectivity experience. For example, the user may have been expecting to download content from the internet at typical NR download speeds but in reality having connected to the network, the content may only be downloaded at typical LTE download speeds (which are generally slower than NR download speeds).

One possible approach which has been proposed to provide a more accurate indication of service availability is for a UE 10 operating in an idle mode and camped on a cell using a first RAT, to make measurements of signals transmitted using a second RAT [11]. For example, a UE 10 operating in an idle mode and camped on an LTE cell provided by an eNB 101 may listen for and measure signals transmitted over one or more NR frequency bands over which the UE 10 is capable of communicating. The UE 10 may therefore directly detect the presence of the availability of a NR deployment by detecting signals transmitted by a gNB 102 providing a NR deployment.

In such an implementation, the UE 10 only measures signals transmitted over NR bands in which the UE 10 is capable of receiving signals. The UE 10 therefore only detects the presence of NR deployments over which the UE 10 is capable of establishing a connection. An indication of the availability of a NR deployment may therefore only be displayed on UE 10, when the UE 10 is capable of establishing a connection over the NR deployment.

It has also been suggested [11] to attempt to reduce the number of NR frequency bands to be scanned/measured by a UE with a view to enabling a more efficient search for available NR bands.

However, as was explained above, it is generally desirable for a UE 10 operating in an idle mode to only listen for and receive communications transmitted over one RAT in order to reduce power consumption when operating in the idle mode. A UE 10 may include separate transceivers for transmitting and receiving signals using different RATs. For example, a UE 10 may include at least a first transceiver for receiving communications over LTE frequency bands and at least a second transceiver for receiving communications over NR frequency bands. Listening for and receiving communications transmitted using multiple RATs in an idle mode may therefore require powering two or more transceivers in the idle mode, whereas only listening for and receiving communications transmitted using a single RAT may only require powering fewer transceivers (e.g. one transceiver) when operating in the idle mode.

Measuring signals in a second RAT whilst camping on a cell using a first RAT in idle mode may therefore undesirably increase power consumption whilst operating in an idle mode, thereby negating a key advantage of the idle mode.

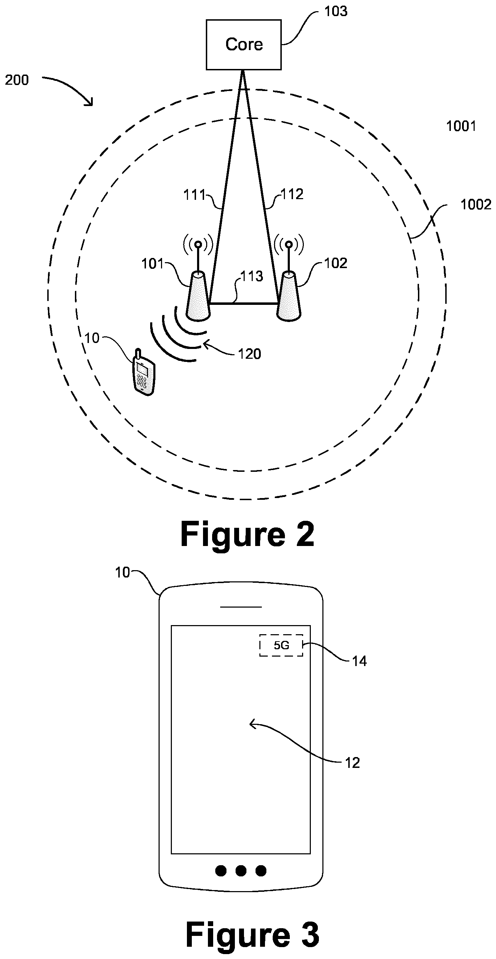

Figure 2 is a schematic illustration of a telecommunications network 200 including a first base station 101 and UE 10 according to an example of the present disclosure. The telecommunications network 200 depicted in Figure 2 includes corresponding components to those described above with reference to Figure 1. The same reference numerals have been used in Figure 2 to denote corresponding components to those described above with reference to Figure 1. No detailed description of the same aspects of the same components of the telecommunications network 200 will be provided again with reference to Figure 2.

The telecommunications network 200 depicted in Figure 2 differs from the telecommunications network 100 described above with reference to Figure 1 in that the first base station 101 and the UE 10 are configured to indicate and establish a service availability respectively.

In particular, the first base station 101 broadcasts system information 120 using a first RAT. The system information 120 includes frequency information indicative of at least one frequency band used by the second base station 102 in providing network coverage using a second RAT. The system information 120 may be received at a UE 10, whilst operating in an idle mode in which the UE 10 periodically listens for transmissions using the first RAT.

The system information may be broadcast by the first base station 101 on a periodic basis. The system information 120 may be broadcast using radio resources (e.g. a given frequency channel and/or a given time slot) which are reserved for communicating system information to devices which are not currently connected to the base station 101. That is, the broadcast system information 120 may enable a UE 10 situated within the coverage area 1001 of the first base station 101 to receive system parameters, which may enable the UE 10 to camp on the cell provided by the first base station 101 (whilst operating in an idle mode) and/or establish an active connection with the first base station 101.

As will be well understood by a skilled person, a base station may broadcast system information in the form of at least one Master Information Block (MIB) and at least one System Information Block (SIB). For example, under LTE communication protocols a eNB may periodically broadcast system information in the form of a MIB and a plurality of SIBs. In at least some examples, the frequency information may be included in a SIB broadcast by the first base station. For example, the frequency information may be included in a second system information block referred to as SIB2. In other examples, the frequency information may be included in one or more other SIBs.

Since the frequency information is broadcast using the first RAT, the UE 10 can receive the frequency information whilst operating in an idle mode, in which it only listens for communications transmitted using the first RAT. The UE does not therefore need to also listen for communications transmitted using the second RAT, whilst operating in an idle mode. Furthermore, since the frequency information includes information indicative of one or more frequency bands used in a deployment of the second RAT, the UE 10 may determine, whilst operating in an idle mode, whether the UE is capable of connecting to the available deployment of the second RAT.

As mentioned above, the UE 10 may determine in dependence on the received frequency information, whether the UE 10 is capable of connecting to the telecommunications network 200 through the second base station 102 and using the second RAT. For example, the UE 10 may compare the one or more frequency bands indicated with the frequency information, with one or more frequency bands assigned to the second RAT and over which the UE 10 is capable of transmitting and receiving communications. If at least one of the one or more frequency bands indicated with the frequency information matches with at least one of the frequency bands assigned to the second RAT in which the UE 10 is capable of operating, the UE may determine that it is capable of connecting to the network 200 through the second base station 102 and using the second RAT.

If the UE determines that the UE is capable of connecting to the telecommunications network 200 through the second base station 102 using the second RAT, the UE 10 may display an appropriate indication on a display of the UE 10. Figure 3 is a schematic illustration of a UE 10 according to examples of the present disclosure. The UE 10 shown in Figure 3 is a mobile telephone such as a smartphone. However, it will be appreciated that a UE 10 as contemplated herein may take any suitable form. Examples of suitable UEs 10 include (but are not limited to) a cellular telephone, a smartphone, a Personal Computer (PC) such as a laptop computer, a tablet device and/or a vehicle infotainment system.

The UE 10 comprises a display 12 on which an indication 14 of service availability may be displayed. In particular, the received frequency information may be passed to higher protocol layers in the UE 10, which may enable an indication 14 of the service availability to be displayed on the display 12. For example, if it is determined, based on the frequency information, that the UE 10 is capable of connecting to the telecommunications network 200 through the second base station and using the second RAT, the UE 10 may display an indication 14 that the UE 10 is capable of connecting to the network 200 using the second RAT.

In the particular example shown in Figure 3, the UE 10 may determine, based on frequency information broadcast from the first base station 101, that the UE 10 is capable of connecting to the network 200 through the second base station 102 using NR. In order to indicate the availability of a NR connection, the UE 10 displays an indication 14 in the form of the text "5G". However, it will be appreciated that other suitable indications 14 may be displayed and may take any form such as one or more of an image, a symbol, an icon and/or text.

In some examples, the frequency information may be indicative of at least one frequency band on which the second base station 102 supports dual connectivity to the network 200 through the second base station 102 and using the second RAT, in addition to connecting through the first base station using the first RAT. Dual connectivity architectures such as MR-DC and EN-DC were described in detail above and will not be described again in detail with reference to Figure 2.

In some examples, dual connectivity may be supported on a subset of all of the frequency bands supported by a base station. For example, the first base station 101 may support communications over a first plurality of frequency bands and the second base station 102 may support communications over a second plurality of frequency bands. However, the first and/or second base stations 101, 102 may only support dual connectivity through both the first and second base stations 101, 102 using a subset of the first plurality of frequency bands and/or a subset of the second plurality of frequency bands. For example, dual connectivity may only be supported by the second base station 102 using a subset of the second plurality of frequency bands. Additionally or alternatively, dual connectivity may only be supported by the first base station 101 using a subset of the first plurality of frequency bands.

As was explained above, in some examples, a UE 10 camped on a cell provided by the first base station and using the first RAT may subsequently connect to the network 200 using dual connectivity by establishing a connection to the first base station 101 and the second base station 102. In such examples, the network service which is available to the UE 10 may depend on whether the UE 10 is capable of operating on one or more frequency bands on which the second base station 102 supports dual connectivity. Broadcasting, frequency information indicative of one or more frequency bands on which the second base station 102 supports dual connectivity may therefore allow a UE to determine whether it is capable of connecting to the second base station 102 using a dual connectivity architecture.

Whilst examples are described herein in which a multi-RAT capable UE 10 may connect to a telecommunications network using dual-connectivity over both a first RAT and a second RAT, in other examples, the UE 10 may connect using the second RAT only. For example, a UE 10 operating in an idle mode and camped on a cell using a first RAT may subsequently connect to the telecommunications network using the second RAT only. For instance, as was described above a multi-RAT capable UE 10 may receive frequency information using a first RAT when operating in idle mode. If the UE 10 determines, from the frequency information, that it is capable of connecting to the network using a deployment of the second RAT, the UE may subsequently establish a connection to the network using the second RAT only (as opposed to using dual connectivity to also connect using the first RAT).

In some examples, dual connectivity may be supported using one or more given frequency band combinations. A frequency band combination may comprise at least a first frequency band used by the first base station 101 and at least a second frequency band used by the second base station 102. In at least some examples, dual connectivity may not be supported on all possible combinations of frequencies bands on which the first base station 101 and the second base station 102 operate. For example, the first base station 101 may support a first plurality of frequency bands and the second base station 102 may support a second plurality of frequency bands. There may therefore be several different possible combinations of first and second frequency bands. However, dual connectivity to both the first 101 and second base 102 stations may only be supported on a subset of all of the possible combinations of first and second frequency bands.

In at least some examples, the frequency information may be indicative of at least one supported frequency band combination, where a frequency band combination represents a combination of frequency bands on which dual connectivity is supported. Dual connectivity to the network may be supported through the first base station 101 using the first RAT and at least one first frequency band and through the second base station 102 using the second RAT and at least one second frequency band.

By broadcasting frequency information indicative of at least one supported frequency band combination, a UE 10 receiving the broadcast frequency information may determine whether it is capable of connecting to the network using a dual connectivity architecture. For example, a UE 10 may compare the frequency bands on which the UE 10 is capable of operating with one or more frequency band combinations on which dual connectivity is supported. If the UE 10 determines that it is capable of connecting to the network using at least one frequency band combination on which dual connectivity is supported, then the UE may determine that it is capable of connecting to a deployment of the second RAT (using a dual connectivity architecture). The UE 10 may therefore display an appropriate indication of the available network service as was described above with reference to Figure 3.

In at least some examples, there may be a relatively large number of candidate frequency bands which might be used by the second base station 102 in providing network coverage using the second RAT. For example, there may be as many as 70 or more different frequency bands assigned to NR. In examples in which the first RAT is LTE and the second RAT is NR, there may be as many 200 or more potential frequency band combinations formed of an LTE frequency band and a NR frequency band.

Broadcasting frequency information indicating which of, for example, 200 or more frequency band combinations are currently supported may significantly increase an amount of information which is broadcast by a base station. For instance, in an illustrative example in which there are 200 or more potential frequency band combinations available, signalling the availability of each frequency band combination may require, for example, 8 or more bits per frequency band combination. This may substantially increase an amount of broadcast system information, thereby using more radio and system resources.

In order to reduce an amount of frequency information which is broadcast by a base station 101, the frequency information may comprise at least one index value. Each index value may be indicative of at least one frequency band used by the second base station 102 in providing network coverage using the second RAT. In at least some examples, the at least one index value may include at least a first index value which is indicative of a supported frequency band combination. For example, a single index value may be used to indicate support for one or more frequency band combinations. The use of index values to indicate supported frequency bands and/or frequency band combinations may reduce a signalling overhead associated with broadcasting the frequency information.

An index value as contemplated herein may comprise an integer. As will be explained in further detail below, a relatively small number of bits may used to represent an integer forming an index value. For example, a four bit or less integer representation may be used for the index values. As will be explained in further detail below, examples are contemplated herein in which an index value comprises a 3 bit integer or even a 2 bit integer.

Index values may be used to indicate one or more frequency bands and/or frequency band combinations by assigning index values to given frequency bands and/or frequency band combinations. For example, a network operator may administer a list of frequency bands and/or frequency band combinations and assign a correspondence between the frequency bands and/or frequency band combinations and index values. A list of frequency bands and/or frequency band combinations along with a correspondence with one or more index values may be referred to herein as a frequency band lookup table.

A frequency band lookup table used in a telecommunications network 200 may be known by both a first base station 101 and a UE 10. That is, a first base station 101 and a UE 10 may have a common understanding of the correspondence of index values to the given frequency bands and/or frequency band combinations. The first base station 101 may therefore broadcast the frequency information in the form of one or more index values. A UE 10 situated within the coverage area 1001 of the first base station 101 may receive the frequency information in the form of one or more index values and may interpret the index values according to the known frequency band lookup table.

In at least some examples, a number of frequency bands and/or combinations which are deployed by a network operator and/or in a given geographical region may be less than a total number of frequency bands and/or frequency band combinations which are available using the first and second RATs. For example, as was explained above there be as many as 70 or more frequency bands which are assigned to NR. However, in a given geographical region (e.g. a country) only a subset of the NR frequency bands may be used in NR deployments in that region. Additionally or alternatively, a given network operator may only use a subset of the NR frequency bands in NR deployments across a network. Similarly, only a subset of the total number of frequency bands assigned to LTE may be used in a given geographical region and/or may be deployed by a given network operator.

As was described above, the total number of frequency bands and/or frequency band combinations which may be used in a given geographical region and/or deployed by a given network operator may be less than a total number of possible frequency bands and/or frequency band combinations which could be used for a given RAT deployment. In at least some examples, a frequency band lookup table may be used which includes only a subset of a total number of frequency bands and/or frequency band combinations which could be used for a given RAT deployments.

As will be explained in further detail below, a frequency band lookup table may be communicated to a UE 10 or otherwise known to a UE 10 in a number of different ways. For example, the core network 103 may send a frequency band lookup table to the UE 10 when the UE first attaches to the telecommunications network. Additionally or alternatively, the core network 103 may send a frequency band lookup table to the UE 10 during one or more update procedures such as a tracking area update procedure. Additionally or alternatively, a predetermined frequency band lookup table may be stored by the UE 10. Additionally or alternatively, a predetermined frequency band lookup table may be defined in a published standard. The UE 10 may be configured in accordance with the standardised lookup table and may therefore operate in accordance with the standardised lookup table. By having a commonly known frequency band lookup table, the base station 101 may broadcast the frequency information in the form of one or more index values, thereby reducing the number of bits of information used to broadcast the frequency information.

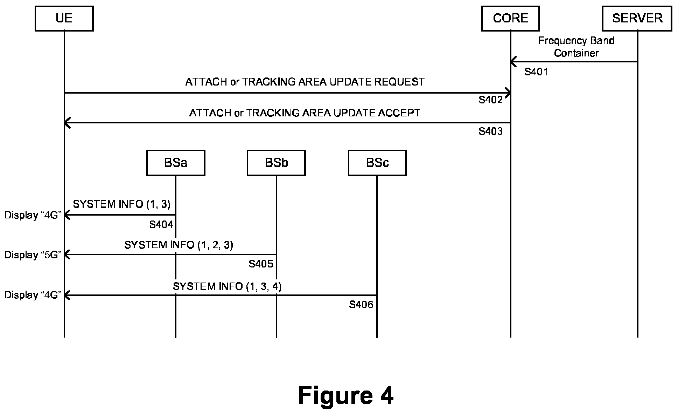

Figure 4 is a schematic illustration of signalling between a core network, a plurality of base stations and a UE according to an example of the present disclosure. In the example shown in Figure 4, there are three bases stations denoted BSa, BSb and BSc respectively. Each of the base stations BSa, BSb, BSc may be of a type described above as a first base station and may use a first RAT. For example, the base stations BSa, BSb and BSc may be eNBs. Whilst not shown in Figure 4, each base station BSa, BSb and BSc may be associated with one or more second base stations 102 which use a second RAT. The associated second base stations 102 may provide network coverage using the second RAT over a coverage area which at least partially geographically overlaps with coverage areas of the first base stations BSa, BSb, BSc in the manner described above with reference to Figures 1 and 2.

In the example shown in Figure 1, the UE operates in an idle mode in which it periodically listens for transmissions made using the first RAT. For example, the UE may operate in an idle mode and camp on a cell provided by one of the base stations BSa, BSb, BSc. As will be explained further below, in the example shown in Figure 4, the UE moves between coverage areas provided by the base stations BSa, BSb, BSc.

Also shown in Figure 4 is a core network (denoted "CORE"). Whilst not shown in Figure 4, each of the base stations BSa, BSb and BSc may be connected to the core network. The UE may connect to the core network through one of the base stations BSa, BSb, BSc or through another base station (not shown in Figure 4) also connected to the core network.

Also shown in Figure 4 is a network server (denoted "SERVER"). The server is in communication with the core network. The server may, for example, be operated by an operator of the telecommunications network. Whilst, in the representation shown in Figure 4, the server is not part of the core network, in some examples the network server may form part of the core network. The server may maintain a frequency band lookup table. As was explained above, the frequency band lookup table may comprise a list of frequency bands and/or frequency band combinations along with a correspondence with one or more index values.

The frequency band lookup table may be common across a telecommunications network (e.g. a network operated by the network operator which operates the network server). Additionally or alternatively, the frequency band lookup table may be common across a given geographical region. The frequency band lookup table may comprise a list of frequency bands and/or frequency band combinations which are deployed across the network and/or geographical region. As was explained above this may comprise a subset of all of the possible frequency bands and/or combinations which could be deployed.

At step 401 in Figure 4, the server provides the frequency band lookup table to the core network. For example, the server may provide the frequency band lookup table to a Mobility Management Entity (MME) which forms part of the core network.

As will be well understood by a skilled person, a UE may at times exchange control plane communications with the core network. For example, when a UE is first switched on or first enters a coverage area of the network, the UE may send an ATTACH Request to the core network. Additionally or alternatively, when the UE moves between tracking areas managed by the core network, the UE may send Tracking Area Update (TAU) Request to the core network. Such requests are shown at step 402 of Figure 4. In at least some examples, the ATTACH Request and/or the TAU Request sent by a UE may include device capability information. The device capability information may, for example, include frequency bands and/or frequency band combinations which are supported by the UE. The core network may maintain a record of the device capability information associated with the UE.

In response to an ATTACH Request or a TAU Request sent by the UE, the core network responds with an ATTACH Accept or TAU Accept message at step 403. An ATTACH Accept and/or a TAU Accept message may include the frequency band lookup table provided to the core network at step 401. The ATTACH and/or TAU Request and/or Accept messages may, for example, be exchanged between the UE and MME which forms part of the core network.

By providing the frequency band lookup table to the UE as part of an ATTACH and/or TAU Accept message, the UE is informed of the frequency band lookup table and can use the frequency band lookup table to interpret frequency information included in system information broadcasts. For example, the UE may store the frequency band lookup table in a memory of the UE for future retrieval and use.

Whilst not explicitly shown in Figure 4, a skilled person will understand that communications between the UE and the core network may be transmitted and/or received through a base station. The base station may be any base station provided in the network and which is in communication with the core network. For example, a base station used to conduct communications between the UE and the core network need not necessarily be any of the base stations BSa, BSb, BSc shown in Figure 4.

Whilst examples have been described in which the frequency band lookup table is provided to a UE as part of an ATTACH and/or TAU exchange with the core network, in other examples the UE may be provided with the frequency band lookup table in any other suitable way. For example, the frequency band lookup table may be sent to the UE as part of any control plane signalling with the core network. Additionally or alternatively, the frequency band lookup table may be pre-determined and stored by the UE (e.g. during manufacture of the UE and/or during a software update carried out at the UE).

In at least some examples, a UE may store one or more frequency band lookup tables in memory for one or more networks and/or regions. For example, a UE may store a first frequency band lookup table associated with a first network or region and a second frequency band lookup table associated with a second network or region. During operation, the UE may recognise the network to which it is attached and/or a region in which it is situated and may retrieve and use a stored frequency band lookup table for the recognised network and/or region.

At step S404 of Figure 4, the UE is situated in a coverage area of the base station denoted BSa. For example, the UE may be operating in an idle mode and may be camped on a cell provided by the base station denoted BSa. As was explained above, with reference to Figure 2, the base station BSa broadcasts system information comprising frequency information. In particular, at step 404 of Figure 4, the base station BSa broadcasts frequency information comprising index values 1 and 3. The frequency information may, for example, indicate that in the coverage area of the base station BSa, dual connectivity is supported using frequency bands and/or combinations which are assigned the index values 1 and 3 in the frequency band lookup table.

In the particular example which is shown in Figure 4, the UE may be capable of connecting to a dual connectivity architecture using a frequency band and/or frequency band combination which corresponds to the index value 2 in the frequency band lookup table. Since the index value 2 was not included in the frequency information broadcast by the base station BSa, the UE may determine that it is not capable of connecting to the currently available dual connectivity architecture. For example, in the case of an EN-DC architecture, the UE may determine that it is only capable of connecting to currently available LTE services and not to any NR services. The UE may display a suitable indication of the established service availability which in this case may comprise an indication in the form of the text "4G".

At step 405, the UE enters a coverage area provided by the base station denoted BSb. The base station BSb broadcasts frequency information comprising index values 1, 2 and 3. Since the UE is capable of connectivity using the frequency band and/or frequency band combination denoted with the index value 2 (which is included in the broadcast frequency information), the UE may determine that it is capable of connecting using the currently available dual connectivity configuration. For example, in the case of an EN-DC architecture, the UE may determine that it is capable of connecting to currently available NR services. The UE may therefore display a suitable indication of the established service availability which in this case may comprise an indication in the form of the text "5G".

As was explained above, whilst examples have been described in which a UE may connect to a network using a dual connectivity configuration, a UE may alternatively connect using a single RAT configuration. For example, the UE may connect using the second RAT, when it is determined that a compatible deployment of the second RAT is available. That is, a UE operating in idle mode and receiving frequency information broadcast using the first RAT may determine, based on the frequency information, that the UE is capable of connecting to the network using a deployment of the second RAT alone.

At step 406, the UE enters a coverage area provided by the base station denoted BSc. The base station BSc broadcasts frequency information comprising index values 1, 3 and 4. Since the broadcast frequency information does not include the index value 2 (which corresponds to a frequency band and/or combination in which the UE is capable of operating), the UE may once again determine that it is not capable of connecting to the currently available dual connectivity configuration. For example, in the case of an EN-DC architecture, the UE may determine that it is only capable of connecting to currently available LTE services and not able to combine this connectivity with any currently available NR services. The UE may therefore display a suitable indication of the established service availability, which in this case may comprise an indication in the form of the text "4G".

Whilst not shown in Figure 4, communications may be exchanged between the core network and the base stations BSa, BSb, BSc using the first RAT. Furthermore, communications may be exchanged between the core network and second base stations in the network, which use the second RAT.

For example, referring to the architecture of Figure 2, the first base station 101 may send an indication to the core network 103 of the frequency bands which are supported/used by the first base station 101. Additionally or alternatively, the second base station 102 may send an indication to the core network 103 of the frequency bands which are supported/used by the second base station 102. For example, the second base station 102 may send the indication to the core network 103 over a direct interface 112 between the second base station 102 and the core network. Additionally or alternatively, the second base station 102 may send the indication to the core network 103 using the first base station 101 (e.g. over the interface 113 between the first 101 and second 102 base stations).

The core network 103 may determine (e.g. based on indications received from the first 101 and/or second 102 base stations), the frequency information to be broadcast by the first base station 101. For example, the core network 103 may determine on which frequency bands and/or frequency band combinations, dual connectivity is supported using the first 101 and second 102 base stations and may generate suitable frequency information based on this determination. The core network may send the generated frequency information to the first base station 101 in order for the first base station 101 to broadcast the frequency information.

As was explained above, the core network may receive and/or maintain a frequency band lookup table including one or more index values associated with frequency bands and/or frequency band combinations. The core network 103 may use the frequency band lookup table to determine which index value(s) to include in the frequency information. The core network 103 may then send the determined index value(s) to the first base station 101 in order for the first base station 101 broadcast the index value(s).

In some examples, the first base station 101 may generate the frequency information. For example, the first base station 101 may receive from the core network 103 and/or the second base 102 an indication of the frequency bands used by the second base station 102 and generate suitable frequency information based on the received indication. In examples, in which the frequency information comprises one or more index values, the first base station 101 may receive and/or administer a frequency band lookup table. For example, the core network 103 may send the frequency band lookup table to the first base station 101. The first base station 101 may determine one or more index values to include in the frequency information based on the frequency band lookup table.

By way of an illustrative example, several frequency band combinations which may be indicated in a frequency information broadcast are shown below in Table 1. The first column (counting from the left) of Table 1 lists several frequency band combinations. Each frequency band combination includes a first frequency band assigned to a first RAT and a second frequency band assigned to a second RAT. For example, the frequency band combination listed as "3+n78" comprises a first frequency band assigned to a first RAT and labelled as "3" and a second frequency band assigned to a second RAT and labelled as "n78". In the particular example of Table 1 the first RAT may comprise LTE and the second RAT may comprise NR. Each frequency band combination may relate to a combination of first and second frequency bands (on first and second RATs respectively) on which dual connectivity (e.g. EN-DC) is supported.

**Table 1**

| **Sending Band Combination** | | **Sending Indexes** | |
|---|---|---|---|
| **Band Combination** | **No. of bits** | **Index Value** | **Bitmap with index list (value 1 = sent, value 0 = not sent)** |
| Length field | 8 | Length Field | 3 bits |
| 3+n78 | 8 | 1 | 1 bit, with value 1 |
| 20+n78 | 8 | 2 | 1 bit, with value 1 |
| 7+n78 | 8 | 3 | 1 bit, with value 1 |
| 20+n38 | 8 | 4 | 1 bit, with value 1 |
| 8+n38 | Not sent | 5 | 1 bit, with value 0 |
| 28+n78 | 8 | 6 | 1 bit, with value 1 |
| 28+n38 | Not sent | 7 | 1 bit, with value 0 |
| 3+n38 | Not sent | 8 | 1 bit, with value 0 |
| **Total bits sent** | **48 bits** | **Total bits sent** | **11 bits** |

The eight frequency band combinations which are given in the first column of Table 1 may represent eight frequency band combinations which may be deployed across a given geographical region and/or by a given network operator. As was explained above this may represent a subset of a total number of possible frequency band combinations which could be deployed. For example, there may be as many as 200 or more frequency band combinations which might be used for a EN-DC deployment.

As is further shown in Table 1, in addition to the frequency band combinations listed in the first column, a length field may also be included as part of broadcast frequency information. The length field may, for example, represent a maximum number of band combinations which may be simultaneously deployed in a given cell of the network.

The second column of Table 1 indicates the number of bits of information which may be transmitted in order to indicate each band combination given in the first column. The number of bits of information in the second column represents the number of bits used to communicate the specific combination of bands given in the first column. As was described above, there may be a relatively large number of possible band combinations which may be deployed for a given dual connectivity architecture. For example, as many as 200 or more band combinations may be used to deploy an EN-DC architecture. In order to uniquely indicate each of the possible band combinations a representation of each band combination may comprise, for example, 8 bits or more of information.

In the example, indicated in Table 1, the frequency information to be broadcast by a first base station 101 indicates that five of the eight listed frequency band combinations are being supported by the first 101 and second base stations 102. For example, the first 101 and second base stations 102 may support dual connectivity using five of the eight frequency band combinations.

In the example of Table 1, each supported frequency band may be indicated by way of 8 bits of information. Furthermore, the length field may comprise 8 bits of information. Indications of the remaining three listed frequency band combinations ("8+n38", "28+n38" and "3+n38") are not sent as part of the frequency information, since they are not currently supported. As is shown in the final row of the second column of Table 1, indicating each of the supported frequency band combinations and the length field may require broadcasting frequency information comprising at least 48 bits of information.

The third column of Table 1 lists index values which are assigned to the frequency band combinations listed in the first column. As was explained above, a correspondence between frequency band combinations and index values may form part of a frequency band lookup table which may be known to both a broadcasting base station 101, and a receiving UE 10. In the example of Table 1, a total of eight frequency band combinations are deployed in the geographical region or by the network operator under consideration. In such an example, the frequency band lookup table may only include the eight deployed frequency band combinations which are each assigned an index value ranging from 1 to 8. Since only a subset of all possible band combinations are included in the frequency band lookup table, the total range of index values is reduced (when compared to, for example, indexing each of all possible frequency bands). Consequently, a reduced bit representation of each index value may be used. For example, index values in the range 1-8 may each be signalled as part of a bitmap representation, where each position in the bitmap represents an index value

For example, as is indicated in the fourth column a single bit (i.e. 1 or 0) may be signalled for each index value. The bit which is signalled for each index value indicates whether the frequency band (or frequency band combination) corresponding to the index value is supported. For example, a single bit with value 1 may indicate that the corresponding frequency band (or frequency band combination) is supported and a single bit with value 0 may indicate that the corresponding frequency band (or frequency band combination) is not supported, or vice versa. The index value to which each bit corresponds may be determined by the position in bitmap. For example, position 1 in the bitmap may correspond to index value 1, position 2 in the bitmap may correspond to index value 2, position 3 in the bitmap may correspond to index value 3 and so on. However, any suitable mapping between position in the bitmap and index value may be used.

The number of bits used to represent each index value (and an associated length field) is given in the fourth column of Table 1. As is shown in the final row of the fourth column of Table 1, a total of 11 bits of information may be used to signal the availability of the five currently supported frequency band combinations. It will be appreciated that this is significantly less than the 48 bits used to signal the available frequency band combinations without using the index values.

Whilst an illustrative example is provided in which a bitmap representation is used to signal supported index values, in other examples other representations may be used. For example, the index values may be signalled as integers. Any suitable integer representation may be used. For example, the smallest bit integer representation to cover the full range of index values may be used. That is, in an example in which the index values range from 1-8, the smallest bit representation which can be used to signal each of the index values is a 3 bit integer representation. An integer representation of index values corresponding to supported frequency bands (or frequency band combinations) may be included in the frequency information, whereas index values corresponding to frequency bands (or frequency band combinations) which are not supported may be omitted from the frequency information.

In at least some examples, an index value may be used to indicate support for a plurality of frequency bands and/or frequency band combinations. This may allow the total number of index values to be included in a system information broadcast to be reduced.

An index value may be used to indicate support for a plurality of frequency bands and/or frequency band combinations if a plurality of frequency bands and/or frequency band combinations are always deployed together. To provide a purely illustrative example, in a given network and/or geographical region, in every location where the frequency band combination 3+n78 is deployed, the frequency band combinations 20+n78 and 7+n78 may also always be deployed. It may therefore be unnecessary to separately indicate that each of the 3+n78, 20+n78 and 7+n78 band combinations are deployed but rather a single index value may be provided which indicates the deployment of all three band combinations.

By way of a further illustrative example, several frequency band combinations which may be indicated in a frequency information broadcast are shown below in Table 2. Similarly to Table 1 above, the first column (counting from the left) of Table 2 lists several frequency band combinations. These frequency band combinations are provided in the same format as was described above with reference to Table 1. As can be seen in Table 2, a total of eight frequency band combinations are listed. The eight frequency band combinations may, for example, represent all of the frequency band combinations which are deployed across a given network and/or in a given region. The eight frequency band combinations may, for example, be listed in a frequency band lookup table with corresponding index values as was described above.

**Table 2**

| | **One Index Per Band Combination** | | **Indexes Indicating a Plurality of Band Combinations** | |
|---|---|---|---|---|
| **Band Combination** | **Index Value** | **No. of bits with bitmap** | **Index Value** | **Bitmap with index list (value 1 = sent, value 0 = not sent)** |
| Length field | Length field | 3 | Length Field | 2 |
| 3+n78 | 1 | 1 | 1 | 1 bit, with value 1 |
| 20+n78 | 2 | 1 | | |
| 7+n78 | 3 | 1 | | |
| 28+n78 | 4 | 1 | 2 | 1 bit, with value 1 |
| 8+n38 | 5 | 1 | 3 | 1 bit, with value 1 |
| 20+n38 | 6 | 1 | | |
| 3+n38 | 7 | 1 | | |
| 28+n38 | 8 | 1 | 4 | 1 bit, with value 1 |
| | **Total bits sent** | **11 bits** | **Total bits sent** | **6 bits** |

The second column of Table 2 indicates index values which might be assigned to the band combinations if a separate index value is assigned to each listed frequency band combination. As is shown in Table 2, each frequency band combination may be assigned an index value ranging from 1-8. The third column of Table 2 indicates the number of bits of information used to represent each index value. Since the index values range from 1-8, a bitmap of 8 index positions may be used to represent support or otherwise for each of the index values (as was described above with reference to Table 1).. If the frequency information broadcast comprises an 8 bit bitmap, along with a corresponding length field, then the frequency information broadcast may comprise a total of 11 bits of information (as indicated in the final row of the third column of Table 2).

The fourth column of Table 2 indicates index values which might be assigned to the band combinations if at least some of the index values each indicate a plurality of frequency bands. As was explained above, in some examples, the first three frequency band combinations listed in Table 2 may always be deployed together. This may allow a single index value to be assigned to indicate deployment of all three frequency bands together. Similarly, the fifth, sixth and seventh frequency band combinations listed in Table 2 may always be deployed together. This may also allow a single index value to be assigned to indicate deployment of the fifth, sixth and seventh frequency band combinations together.

Since at least some of the index values each indicate deployment of a plurality of frequency band combinations, the total number of index values needed to indicate all possible frequency band combinations is reduced. In the example of Table 2, index values ranging from 1-4 may be used to indicate the deployment of all possible frequency band combinations.

The fifth column of Table 3 indicates the number of bits of information used to represent each index value included in the fourth column. Since the index values only range from 1-4, the index values be represented using a 4 bit bitmap representation. If the frequency information broadcast comprise the 4 bit bitmap along with a corresponding length field, then the frequency information broadcast may comprise a total of 6 bits of information (as indicated in the final row of the fifth column of Table 2). It will be appreciated that this is less than the 11 bits used to signal the same frequency band combinations using eight separate index values. By using one or more index values which each indicate a plurality of frequency band combinations, the total bits of information included in a frequency information broadcast may therefore be advantageously reduced.

As was explained above with reference to Table 1, in other examples an integer representation may be used to signal support or otherwise for each of the index values. For example, using the example shown in Table 2 support for one or more of the frequency band combinations assigned index values ranging from 1-4 may be signalled using a 2 bit integer representation of the index values.

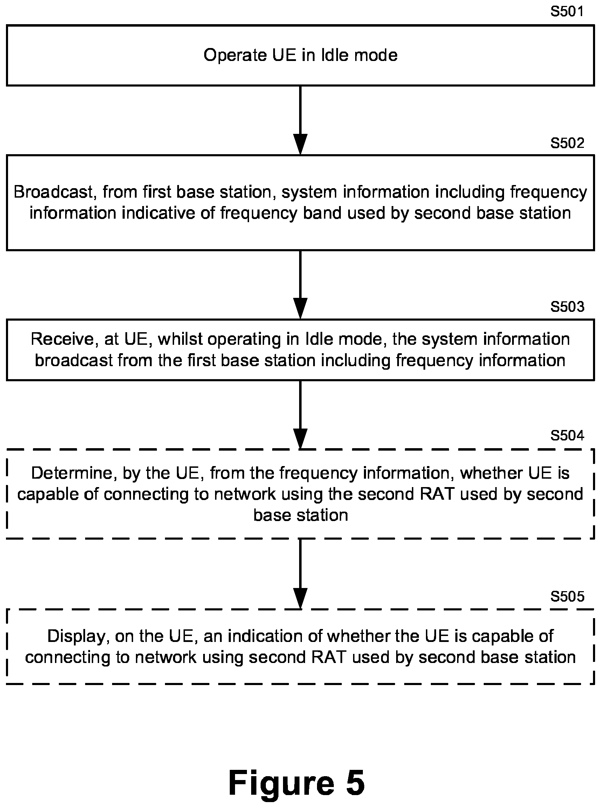

Figure 5 illustrates a method of establishing service availability in a mobile telecommunications network according to examples of the present disclosure. As described above, the mobile telecommunications network may comprise a first base station 101 providing network coverage using a first RAT, and a second base station 101 providing network coverage using a second RAT. The network coverage provided by the second base station 102 at least partially overlaps with the network coverage provided by the first base station 101. The first 101 and second 102 base stations may be connected to a common core network 103. The first 101 and second 102 base stations may support a dual connectivity architecture in which a UE simultaneously connects to both the first 101 and second 102 base stations.

At step S501, a UE situated in a coverage area (e.g. a cell) of the first base station operates in an idle mode. When operating in an idle mode the UE periodically listens for transmissions made using the first RAT. For example, the UE may synchronise its DRX cycle with the first base station 101 and periodically listen for and receive transmissions from the first base station 101 when operating in an idle mode. The idle mode may, for example, correspond to an RRC Idle mode as will be understood by a skilled person.

At step 502, the first base station 101 broadcasts system information including frequency information. The system information is broadcast by the first base station 101 using the first RAT. The system information may therefore be received by a UE operating in an idle mode in which the UE periodically listens for transmissions made using the first RAT. The system information is broadcast such that it is not addressed to a particular node or device and may therefore be received by any suitable device situated within the coverage area of the first base station 101.

The frequency information includes frequency information indicative of at least one frequency band used by the second base station in providing network coverage using the second RAT. In some examples, the frequency information may indicate at least one frequency band on which the second base station 102 supports dual connectivity of a UE to the second base station 102 using the second RAT and to the first base station 101 using the first RAT. In some examples, the frequency information may indicate one or more frequency band combinations. A frequency band combination may include at least a first frequency band used by the first base station 101 in providing network coverage using the first RAT and at least a second frequency band used by the second base station 102 in providing network coverage using the second RAT. An indicated frequency band combination may be a frequency band combination on which dual connectivity to both the first 101 and second 102 base stations is supported.

In at least some examples, the frequency information may comprise at least one index value. Each index value may be indicative of at least one frequency band used by the second base station in providing network coverage using the second RAT. The index values may include one or more index values which are each indicative of a plurality of frequency bands used by the second base station. In at least some examples, the index values may include one or more index values which are each indicative of a frequency band combination. The index values may include one or more index values which are each indicative of a plurality of frequency band combinations.

The index values may comprise integers. The integers may be comprise a representation formed of 8 bits or less. In some examples, an integer representation may be used comprising 4 bits or less (e.g. 3 bits or even 2 bits). The index values may also be represented in the form of a bitmap, where each bit position represents a unique index value.

At step 503, the UE receives, whilst operating in the idle mode, the system information broadcast by the first base station 101. The UE receives the system information by listening for transmission made using the first RAT. As was described above, the system information includes frequency information indicative of one or more frequency bands used by the second base station 102. The UE therefore receives information indicative of frequency bands used by the second base station 102 without communicating with the second base station 102 or listening for or receiving transmissions made using the second RAT (which is deployed by the second base station 102).

Optionally, at step 504 the UE determines from the frequency information, whether the UE is capable of connecting to the mobile telecommunications network using the second RAT. For example, the UE may determine from the received frequency information, which frequency bands are used by the second base station 102. The UE may compare the frequency bands used by the second base station 102 with one or more frequency bands on which the UE is capable of operating. If the UE is capable of operating on one or more of the frequency bands used by the second base station 102 then the UE may determine that it is capable of connecting to the network using the second base station 102. For example, the UE may determine that it is capable of connecting to the network using a dual connectivity architecture.

Optionally, at step 504 the UE displays on an indication of the whether the UE is capable of connecting to the network using the second RAT used by the second base station 102. For example, the UE may include an electronic display on which such an indication may be displayed whilst operating in an idle mode. The UE may for example, display a name, symbol, image and/or icon associated with a RAT over which the UE is capable of connecting. Such an indication may allow a user of UE to deduce a network service (e.g. a RAT deployment) which is currently available to the UE.

Various examples have been described above in which a UE is capable of connecting to a telecommunications network using a dual connectivity configuration. For example, a UE may connect to a first base station using a first RAT and to a second base station using a second RAT. However, in some examples according to the present disclosure, a UE may connect to the network using a single RAT. For example, a UE may operate in an idle mode and receive a system information broadcast including frequency information from a first base station using a first RAT. The UE may determine from the frequency information that the UE is capable of connecting to the second base station using the second RAT. The UE may then connect to the network using only the second RAT. Various teachings presented herein with reference to a dual connectivity configuration may equally apply to a single RAT configuration.

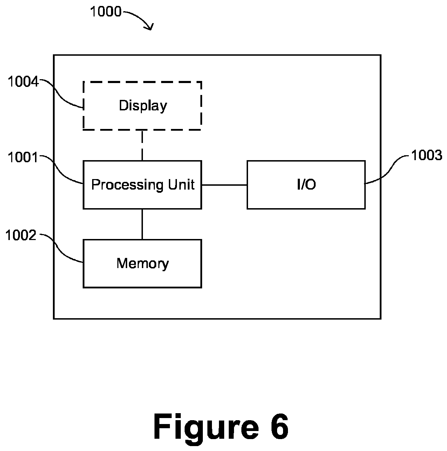

Various examples of network nodes, base stations and UEs have been described above. In general any network node, base station and UE described herein may be implemented in the form of one or more electronic devices. Figure 6 is a schematic illustration of an example electronic device for use in a network. The general structure of the device depicted in Figure 6 may be applicable to any UE, base station and/or any other network node of the present disclosure.

The device 1000 may include at least one processing unit 1001, memory 1002 and an input/output (I/O) interface 1000. The processing unit 1001 may include any suitable processer and/or combination of processors. For example, the processing unit 1001 may include one or more of a Central Processing Unit (CPU) and a Graphical Processing Unit (GPU). The memory 1002 may include volatile memory and/or non-volatile/persistent memory. The memory 1002 may, for example, be used to store data such as an operating system, instructions to be executed by the processing unit (e.g. in the form of software to be executed by the processing unit), configuration information related to the device 1000, session information and/or configuration or registration information associated with any other device, node or module in the network. For example, the memory 1002 may be used to store frequency information related to one or more frequency bands used by the device 1001 and/or one or more other devices in a network. In some examples, the memory 1002 may be used to store a frequency band lookup table of the type described above.

At least the processing unit 1001 is connected to an input/output (I/O) interface 1003. The I/O interface 100 facilitates communication with one or more other devices, network nodes or modules in a network. For example, the I/O interface 1003 may be operable to transmit and/or receive communications to/from other devices in a network. In some examples, the I/O interface 1003 may be operable to transmit and/or receive communications over an air interface. For example, the I/O interface 1003 may include a transmitter and/or a receiver for transmitting and/or receiving wireless communication (e.g. radio frequency signals). In some examples, the I/O interface 1003 may include a transceiver configured to receive and transmit wireless communication (e.g. radio frequency signals). In some examples, the I/O interface 1003 may be operable to additionally or alternatively communicate over one or more wired connections.

Optionally, the device 1000 may further include a display 1004. For example, where the device 1000 is a UE, the UE may include a display 1004 for displaying information to a user of the UE. The display 1004 may comprise any suitable electronic display such as a touch sensitive display. The display 1004 may be connected to at least to the processing unit 1001. The processing unit 1001 may generate display signals which are sent to the display 1004 in order to cause the display information.

In the interest of conciseness not all possible alternatives which fall within the scope of the present disclosure have been explicit discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Within the context of the present disclosure a device, such as a UE, a base station, or a network module or node, is generally considered from a logical perspective, as the element carrying out the appropriate function. Any such device may be implemented using one or more physical elements as deemed appropriate. For example, it may be implemented in one (or more) of: a standalone physical device, in two or more separate physical devices, in a distributed system, in a virtual environment using any suitable hardware or hardware combination, etc.

It will be appreciated that examples of the present disclosure can be realised in the form of hardware, software or a combination of hardware and software.

Features, integers, characteristics, or groups described in conjunction with a particular aspect, embodiment or example of the invention or present disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples.

### References

[1] 3GPP TS 36.101 V16.1.0 (2019-03) "Evolved Universal Terrestrial Radio Access (E-UTRA); User Equipment (UE) radio transmission and reception"
[2] 3GPP TS 38.101-3 V15.50 (2019-04-04) "NR; Multi-connectivity; Overall description; Stage-2"
[3] 3GPP TS 37.340 V15.5.0 (2019-04-09) "NR; User Equipment (UE) radio transmission and reception; Part 3: Range 1 and Range 2 Interworking operation with other radios"
[4] 3GPP TSG-RAN WG2 Meeting #100, R2-1713639, "Introduction of NR indication"
[5] 3GPP TSG-RAN WG2 Meeting #98, R2-1708574, "5G Availability Indicator"
[6] 3GPP TSG RAN WG2 Meeting #99, R2-1709978, "LS on NR Indication"
[7] 3GPP TSG-RAN WG2 Meeting #100, R2-1712806, "How to implement an NR indicator in LTE system information"
[8] 3GPP TSG-RAN WG2 Meeting #100, R2-1713443, "5G indicator for EN-DC"
[9] 3GPP TSG-RAN WG2 Meeting #100, R2-1713952, "LS Reply to 3GPP SA2 on Status Icon related to 5G"
[10] 3GPP TSG-RAN WG2 Meeting #102, R2-1806813, "Considerations on 5G icons"
[11] 3GPP TSG-RAN WG2 Meeting -101, R2-1803664, "Consideration on the GSMA NR indication requirements"

## Claims

1. A method of providing an indication of service availability in a mobile telecommunications network including a first base station providing network coverage using a first Radio Access Technology, RAT, and a second base station providing network coverage using a second RAT, wherein the network coverage provided by the second base station at least partially geographically overlaps with the network coverage provided by the first base station, the method comprising:
broadcasting by the first base station, and using the first RAT, system information including frequency information comprising at least one index value, wherein each of the at least one index value is indicative of at least one frequency band used by the second base station in providing network coverage using the second RAT.

2. The method of claim 1, wherein the at least one index value includes one or more index values each indicative of a plurality of frequency bands used by the second base station in providing network coverage using the second RAT.

3. The method of any preceding claim, wherein the frequency information is indicative of at least one frequency band on which the second base station supports dual connectivity of a user equipment, UE, to the mobile telecommunications network through the second base station using the second RAT and the first base station using the first RAT.

4. The method of claim 3, wherein the frequency information is indicative of at least one supported frequency band combination comprising:
at least a first frequency band used by the first base station in providing network coverage using the first RAT; and
at least a second frequency band used by the second base station in providing network coverage using the second RAT,
wherein the mobile telecommunications network supports dual connectivity of a UE to the mobile telecommunications network through the first base station using the first RAT and the at least one first frequency band and through the second base station using the second RAT and the at least one second frequency band.

5. The method of claim 4, wherein at least a first index value of the at least one index value is indicative of a supported frequency band combination.

6. The method of any preceding claim, wherein broadcasting the system information comprises broadcasting a System Information Block, SIB, including the frequency information.

7. The method of any preceding claim, further comprising receiving at the first base station the frequency information from a core network of the mobile telecommunications network and including the received frequency information in the broadcast system information.

8. The method of any preceding claim, wherein the method further comprises:
receiving at the first base station a frequency band lookup table comprising a plurality of frequency bands and corresponding index values; and
determining, in dependence on the received frequency band lookup table, one or more index values to include in the broadcast frequency information.

9. A method of establishing service availability in a mobile telecommunications network supporting a plurality of Radio Access Technologies, RATs, the method comprising:
operating a User Equipment, UE, in an idle mode in which the UE periodically listens for transmissions made using a first RAT; and
receiving at the UE, whilst operating in the idle mode, a system information broadcast from a first base station providing network coverage using the first RAT,
wherein the system information broadcast includes frequency information comprising at least one index value, wherein each of the at least one index value is indicative of at least one frequency band used by a second base station in providing network coverage using a second RAT, wherein the network coverage provided by the second base station at least partially geographically overlaps with the network coverage provided by the first base station, and wherein the frequency information is for establishing whether the UE is capable of receiving network coverage from the second base station using the second RAT.

10. The method of claim 9, further comprising: determining from the at least one index value, one or more frequency bands used by the second base station in providing network coverage using the second RAT.

11. The method of claim 10, wherein determining the one or more frequency bands comprises looking up the at least one index value in a lookup table comprising a plurality of frequency bands and corresponding index values.

12. The method of any of claims 9-11, further comprising determining, by the UE, and in dependence on the received frequency information, whether the UE is capable of connecting to the telecommunications network through the second base station and using the second RAT.

13. The method of claim 12, further comprising:
if it is determined that the UE is capable of connecting to the telecommunications network through the second base station and using the second RAT, displaying on a display of the UE an indication that the UE is capable of connecting to the telecommunications network using the second RAT.

14. The method of any of claims 9-13, wherein operating the UE in the idle mode comprises receiving transmissions from the telecommunications network exclusively using the first RAT.

15. The method of any of claims 9-14, further comprising receiving at the first base station the frequency information from a core network of the mobile telecommunications network and including the received frequency information in the broadcast system information.

16. A method of establishing service availability in a mobile telecommunications network including a first base station providing network coverage using a first Radio Access Technology, RAT, and a second base station providing network coverage using a second RAT, wherein the network coverage provided by the second base station at least partially geographically overlaps with the network coverage provided by the first base station, the method comprising:
operating a User Equipment, UE, in an idle mode in which the UE periodically listens for transmissions made using the first RAT;
broadcasting by the first base station, and using the first RAT, system information including frequency information comprising at least one index value, wherein each of the at least one index value is indicative of at least one frequency band used by the second base station in providing network coverage using the second RAT;
receiving at the UE, whilst operating in the idle mode, the system information broadcast from the first base station, wherein the frequency information is for establishing whether the UE is capable of receiving network coverage from the second base station using the second RAT.

17. A computer program comprising instructions which, when carried out, cause a method according to any of claims 1-16 to be implemented.

18. A first base station for use in a telecommunications network supporting a plurality of Radio Access Technologies, RATs, wherein the first base station is configured to:
provide network coverage using a first Radio Access Technology, RAT;
broadcast, using the first RAT, system information including frequency information comprising at least one index value, wherein each of the at least one index value is indicative of at least one frequency band used by a second base station, wherein the second base station provides network coverage over the at least one frequency band and using a second RAT, and wherein the network coverage provided by the second base station at least partially geographically overlaps with the network coverage provided by the first base station.

19. A User Equipment, UE, for use in a mobile telecommunications network supporting a plurality of Radio Access Technologies, RATs, the UE being configured to:
operate in an idle mode in which the UE periodically listens for transmissions made using a first RAT; and
receive whilst operating in the idle mode, a system information broadcast from a first base station providing network coverage using a first RAT,
wherein the system information broadcast includes frequency information comprising at least one index value, wherein each of the at least one index value is indicative of at least one frequency band used by a second base station providing network coverage using a second RAT, wherein the network coverage provided by the second base station at least partially geographically overlaps with the network coverage provided by the first base station, and wherein the frequency information is for establishing whether the UE is capable of receiving network coverage from the second base station using the second RAT.

20. A system for establishing service availability in a mobile telecommunications network supporting a plurality of Radio Access Technologies, RATs, the system comprising:
a first base station configured to provide network coverage using a first RAT and to broadcast, using the first RAT, system information including frequency information comprising at least one index value, wherein each of the at least one index value is indicative of at least one frequency band used by a second base station in providing network coverage over the at least one frequency band and using a second RAT, wherein the network coverage provided by the second base station at least partially geographically overlaps with the network coverage provided by the second base station; and
a User Equipment, UE, configured to operate in an idle mode in which the UE periodically listens for transmissions made using the first RAT and to receive at the UE, whilst operating in the idle mode, the system information broadcast from the first base station, wherein the frequency information is for establishing whether the UE is capable of receiving network coverage from the second base station using the second RAT.
